# EUROPÄISCHE PATENTSCHRIFT

(11) **EP 1 431 322 B1**
(45) Veröffentlichungstag und Bekanntmachung des Hinweises auf die Patenterteilung: **26.02.2014**
(21) Anmeldenummer: 03027899.8
(22) Anmeldetag: 05.12.2003
(51) Int. Cl.: C08G 18/40, C08G 18/42, C08G 18/48

(54) **Stabile Polyoldispersionen und daraus hergestellte Polyurethanformkörper und ihre Verwendung**
Stable polyol dispersions and the polyurethane moulded pieces prepared therefrom and their use
dispersions de polyols stables et pièces moulées à partir de celles-ci et leur utilisation

(30) Priorität: 18.12.2002 DE 10259184
(43) Veröffentlichungstag der Anmeldung: 23.06.2004
(73) Patentinhaber: Bayer Intellectual Property GmbH, 40789 Monheim (DE)
(72) Erfinder: Haas, Peter, Dr., 42781 Haan (DE); Neuhaus, Alfred, 42799 Leichlingen (DE)
(74) Vertreter: BIP Patents

(56) Entgegenhaltungen:
- EP-A- 0 705 871
- DE-A- 19 630 281
- DE-A- 19 812 174
- DE-A- 19 936 481
- US-B1- 6 221 929

## Beschreibung

Die vorliegende Erfindung betrifft Polyoldispersionen, die über einen langen Zeitraum stabil sind damit hergestellte zellige Polyurethanformkörper, Verfahren zu ihrer Herstellung und ihre Verwendung.

In DE-A 2 307 589 wird die Herstellung von leichttrennenden Polyurethanformteilen (PUR-Formteilen) durch Verwendung von mit Fettsäureestern modifizierten Polyisocyanaten beschrieben. DE-A 2 121 670 offenbart die Herstellung von leichttrennenden PUR-Formteilen durch Verwendung von speziellen Trennmitteln, die über das Polyol in die Reaktion eingebracht werden. Bevorzugt werden die Trennmittel sowohl der Isocyanatkomponente als auch der Polyolkomponente vor deren Reaktion miteinander zugegeben, um ein hohes Maß an Trennwirkung zu erreichen.

In EP-A-0 705 871 werden Formtrennmittel hergestellt aus Umsetzungsprodukte aus Aminen und Propylenoxid mit Fettsäuren. Die Formtrennmittel bestehen überwiegend aus Ammoniumsalze oder Säureamide.

DE-A-198 12 174 beschreibt die Umesterung von Fettsäureglyceriden mit H-funktionellen Substanzen. Diese Umesterungsprodukte sollten eine niedrige Polyolviskosität, eine gute Verträglichkeit mit den anderen Polyurethankomponenten und eine gute Lösefähigkeit für die halogenfrien Treibmittel aufweisen.

In den letzten Jahren wurden vorzugsweise versucht, auf die üblichen physikalischen Treibmittel bei der Herstellung von PUR-Formteilen zu verzichten. Bei der Verwendung von Wasser als Treibmittel neigen jedoch die üblichen Polyolformulierungen zu größerer Instabilität und schnellerer Phasentrennung, so dass sie nicht lange gelagert werden können oder eine Phasenseparation aufwendig verhindert werden muss.

Aufgabe der vorliegenden Erfindung war es daher, Polyolformulierungen zur Herstellung von zelligen Polyurethanformkörpern mit gutem Trennverhalten zur Verfügung zu stellen, die, obwohl sie Wasser als Treibmittel enthalten, ausreichend stabil sind und nicht oder erst nach längerer Lagerung Phasentrennung zeigen.

Überraschenderweise wurde gefunden, dass der Einsatz bestimmter Trennmittel nicht nur für eine gute Trennung des Formteils sorgt, sondern auch die vorbereitete Polyolformulierung, die diese Formtrennmittel aufweist, stabil ist und nicht oder erst nach längerer Zeit zur Phasentrennung neigt.

Gegenstand der Erfindung sind daher stabile Dispersionen aus Polyolformulierungen für Polyurethanformteile bestehend aus
a) einem oder mehreren Polyetherpolyolen mit einer OH-Zahl von 350 bis 1830 mg KOH/g und mit einer Funktionalität von 2 bis 8 und gegebenenfalls bis zu 40 Gew.-%, bezogen auf a) + b), Polyesterpolyolen mit einer OH-Zahl von 250 bis 500 mg KOH/g und mit einer Funktionalität von 2 bis 3,
b) gegebenenfalls einem oder mehreren Polyetherpolyolen mit einer OH-Zahl von 15 bis 250 mg KOH/g und einer Funktionalität von 2 bis 6,
c1) einem oder mehreren Estergruppen enthaltenden Trennmitteln,
c2) gegebenenfalls einem oder mehreren Amidgruppen enthaltenden Trennmitteln,
d) gegebenenfalls Wasser oder Wasser und physikalische Treibmittel,
e) gegebenenfalls Aktivatoren,
f) gegebenenfalls Stabilisatoren,
g) gegebenenfalls weiteren Zusatzstoffen und Hilfsmitteln,
wobei die Trennmittel c1) aufgebaut sind aus
1) einer oder mehreren Fettsäuren mit 10 bis 40 Kohlenstoffatomen,
2) gegebenenfalls einer oder mehreren Di- oder Polycarbonsäuren,
3) und einer oder mehreren Polyetherpolyolkomponenten mit Ethylenoxid- und/oder Propylenoxidgruppen im Molekül mit einer OH-Zahl von 200 bis 1000 mg KOH/g, bevorzugt von 400 bis 800 mg KOH/g, mit einer Funktionalität von 2 bis 6, bevorzugt von 2 bis 4, wobei die Polyetherpolyolkomponenten durch andere Polyole, die keine Ethylenoxid- und/oder Propylenoxidgruppen im Molekül aufweisen, in einer Menge von bis zu 50 Äquivalent % ersetzt sein können.

Ein weiterer Gegenstand der Erfindung sind zellige Polyurethanformkörper, die durch Umsetzung der erfindungsgemäßen stabilen Dispersionen aus Polyolformulierungen mit organischen Isocyanaten, wie z.B. organische Polyisocyanate, modifizierte organische Polyisocyanate und organische Polyisocyanatprepolymere erhältlich sind.

Die erfindungsgemäßen Dispersionen werden hergestellt, indem die Komponenten a) bis g) miteinander gemischt werden.

Die zelligen erfindungsgemäßen Polyurethanformkörper werden durch Umsetzung der erfindunsgemäßen Dispersionen mit ein oder mehreren organischen Isocyanaten hergestellt.

Als bevorzugte Isocyanatkomponenten seien genannt:

Polyisocyanate der Diphenylmethanreihe, wie beispielsweise 4,4'-Diphenylmethandiisocyanat, 2,4'-Diphenylmethandiisocyanat, polymere Diphenylmethandiisocyanate, wie sie durch Phosgenierung von Anilin-Formaldeyd-Kondensation erhalten werden, verflüssigte oder modifizierte Diphenylmethandiisocyanate, wie sie durch Carbodiimidisierung oder Urethanisierung erhältlich sind. Unter modifizierten Isocyanaten sind beispielsweise Isocyanurate, Biurete, Allophanate und Uretdione zu verstehen.

Polyisocyanate aus der Toluylendiisocyanatreihe sind ebenfalls bevorzugt.

Vorzugsweise werden als Polyetherpolykomponente aus a) reaktive OH-Verbindungen mit einer OH-Zahl von 350 bis 1830 mg KOH/g eingesetzt. Diese Polyhydroxyverbindungen weisen bevorzugt 2 bis 8, besonders bevorzugt 2 bis 6 Hydroxygruppen auf und sind aus Ethergruppen aufgebaut. Diese Polyetherpolyole werden vorzugsweise durch Anlagerung von Propylenoxid und/oder Ethylenoxid an Starterverbindungen wie beispielsweise Glycerin, Trimethylolpropan, Pentaerythrit, Sorbit und Succrose nach den bekannten Verfahren hergestellt. Diese Polyetherpolyole weisen vorzugsweise überwiegend sekundäre OH-Gruppen auf. Es können jedoch auch primäre OH-Gruppen in den Polyetherpolyolen vorhanden sein.

Als Polyesterpolyole aus a) werden, soweit vorhanden, vorzugsweise durch Kondensation von Dicarbonsäuren oder Dicarbonsäureanhydriden, wie beispielsweise Adipinsäure, Phthalsäureanhydrid, Maleinsäureanhydrid mit Glycolen, wie beispielsweise Ethylenglycol, Propylenglycol, Butandiol, Glyzerin sowie Trimethylolpropan hergestellte Verbindungen eingesetzt.

Als Polyetherpolyole (Komponente b)) werden vorzugsweise Reaktionskomponenten mit einer OH-Zahl von 15 bis 250 mg KOH/g verwendet. Diese werden bevorzugt durch Addition von Propylenoxid und/oder Ethylenoxid an Trimethylolpropan, Glycerin, Propylenglycol, Pentaerythrit, Sorbit, Bisphenol A und Hydrochinon hergestellt.

Bei der Komponente c1) handelt es sich um ein Reaktionsprodukt aus einer oder mehreren Fettsäuren mit 10 bis 40 Kohlenstoffatomen, gegebenenfalls einer oder mehreren Di- oder Polycarbonsäuren und einer oder mehrerer Polyetherpolyolkomponenten mit einer OH-Zahl von 200 bis 1 000 mg KOH/g und einer Funktionalität von 2 bis 6. Bei den genannten Polyetherpolyolen handelt es sich vorzugsweise um Komponenten auf der Basis von Glycerin, Pentaerythrit, Sorbit sowie Trimethylolpropan als Starter und Ethylenoxid. Um die Komponente c1) zu erhalten, werden diese Polyetherpolyole mit Fettsäuren, die bevorzugt 10 bis 40 Kohlenstoffatome aufweisen, verestert. Als Fettsäuren werden beispielsweise Ölsäure, Linolsäure, Stearinsäure, Sojaölfettsäure und Montanwachssäure eingesetzt. Die Veresterung kann gegebenenfalls in Anwesenheit einer oder mehrerer Di- oder Polycarbonsäuren erfolgen.

Bei der Polyetherpolyolkomponente zur Herstellung der Estergruppen enthaltenden Trennmittel c1) handelt es sich vorzugsweise um ein Polyetherpolyol auf Basis von Ethylenoxid (60 bis 100 mol-%, bezogen auf Ethylenoxid und Propylenoxid) und gegebenenfalls entsprechenden Anteilen von Propylenoxid und als Starter 1,4-Butandiol, Ethylenglykol, 1,6-Hexandiol, Trimethylolpropan, Penaerythrit, Glycerin, Sorbit, Bisphenol A und Gemische davon.

Bevorzugt werden als Komponente c2), soweit vorhanden, Amidsalze eingesetzt, wie sie durch Umsetzung von Aminen mit Fettsäuren mit 10 bis 40 Kohlenstoffatomen im molaren Überschuss erhalten werden können. Die Amine enthalten mindestens eine tertiäre Aminogruppe sowie mindestens eine primäre oder sekundäre Aminogruppe.

Bevorzugt werden Aktivatoren für die Beschleunigung der Treib- und Vernetzungsreaktion eingesetzt; wie z.B. 1,4-Diaza-bicyclo[2.2]octan, Dimethylcyclohexylamin, Bis-(2-dimethylaminoethyl)-methylamin, Dimethylbenzylamin, Zinn(II)di-2-ethylhexoat, Dimethylzinn(IV)-dilaurat.

Als Stabilisatoren werden bevorzugt die bekannten durch Polyethylenoxid, Polypropylenoxid, Polyetherpolyole modifizierte Polysiloxane verwendet.

Als weitere Zusatzstoffe können beispielsweise Flammschutzmittel, Farbstoffe, Alterungsschutzmittel und Emulgatoren eingesetzt werden.

Die erfindungsgemäßen Dispersionen werden bevorzugt bei der Herstellung von zelligen Formteilen eingesetzt.

Die Erfindung soll anhand der nachfolgenden Beispiele näher erläutert werden.

### Beispiele

A. Estergruppen enthaltende Komponente c1) [Fettsäurepolyester; FSPE]:
   1. 3390 g Ölsäure, 292 g Adipinsäure und 580 g Pentaerythrit;
      OH-Zahl: 54,3 und Säurezahl: 25,5
   2. 1685 g Ölsäure, 146 g Adipinsäure und 447 g Trimethylolpropan; OH-Zahl: 42 und Säurezahl: 2
   3. 1695 g Ölsäure, 146 g Adipinsäure und 560 g eines Polyethers mit einer OH-Zahl von 1000 und hergestellt durch Addition von Propylenoxid an Trimethylolpropan als Starter; OH-Zahl: 53 und Säurezahl: 2,5
   4. 4237 g Ölsäure, 365 g Adipinsäure und 2540 g eines Polyethers mit einer OH-Zahl von 600 und hergestellt durch Addition von Propylenoxid an Trimethylolpropan als Starter; OH-Zahl: 44 und Säurezahl: 2
   5. 4236 g Ölsäure, 365 g Adipinsäure und 2540 g eines Polyethers mit einer OH-Zahl von 600 und hergestellt durch Addition von Ethylenoxid (EO) an Trimethylolpropan (TMP) als Starter; OH-Zahl: 44 und Säurezahl: 2
   6. 847 g Ölsäure, 73 g Adipinsäure und 494 g eines Polyethers mit einer OH-Zahl von 600 und hergestellt durch Addition von Propylenoxid (PO) an Pentaerythrit als Starter; OH-Zahl: 45 und Säurezahl: 3
   7. 3560 g Ölsäure, 306 g Adipinsäure und 533 g eines Polyethers mit einer OH-Zahl von 600 und hergestellt durch Addition von EO und TMP und 1600 g eines Polyethers mit einer OH-Zahl von 600 hergestellt durch Addition von PO an TMP; OH-Zahl: 47 und Säurezahl: 2,7
   8. 1695 g Ölsäure, 306 g Adipinsäure und 508 g eines Polyethers mit einer OH-Zahl von 600 hergestellt durch Addition von EO an TMP sowie 223 g Trimethylolpropan; OH-Zahl: 43 und Säurezahl: 2
   9. 1695 g Ölsäure, 146 g Adipinsäure und 560 g eines Polyethers mit einer OH-Zahl von 1 000 hergestellt durch Addition von EO an Glycerin; OH-Zahl: 43 und Säurezahl: 2
   Die Herstellung erfolgt derart, dass die Komponenten im Verlaufe von ca. 20 Stunden auf 160°C - 200°C erhitzt werden und dann bei 200°C unter Vakuum 10 Stunden verestert werden. Die Säurezahl, die OH-Zahl und das Molekulargewicht werden bestimmt.
B. Komponente a):
   Polyetherpolyol 1:
      Polyether der OH-Zahl 830, der durch Addition von Propylenoxid an Trimethylolpropan erhalten worden ist.
C. Komponente b):
   Polyetherpolyol 2:
      Polyether der OH-Zahl 42 mit überwiegend sekundären OH-Gruppen, der durch Addition von Propylenoxid und Ethylenoxid (im Gemisch) an ein Gemisch aus Trimethylolpropan und Propylenglykol (Molverhältnis 3:1) erhalten worden ist.
D. Aktivatoren e) und Stabilisatoren f):
   Stabilisator Tegostab B 84 11 der Fa. Goldschmidt
   Aktivator Desmorapid® 726 b der Fa. Bayer AG
E. Isocyanat:
   95 Gewichtsteile (0,38 Mol) eines Polyisocyanates, das durch Phosgenierung von Anilin-Formaldehyd-Kondensaten hergestellt wurde und eine Viskosität bei 25°C von 320 cP und einen NCO-Gehalt von 31,5 Gew.-% aufweist, und 5 Gewichtsteile (0,004 Mol) eines Fettsäureesters:
   544 Gew.-Teile Pentaerythrit, 3390 Gew.-Teile Ölsäure, 292 Gew.-Teile Adipinsäure; OH-Zahl: 19,5 und Säurezahl: 25,0; Molekulargewicht: etwa 1100.
   Die Komponenten werden bei 70°C zur Reaktion gebracht. Das Reaktionsgemisch wird 4 Stunden unter Rühren auf 70°C gehalten. Nach Beendigung der Reaktion eträgt der NCO-Gehalt des das Umsetzungsprodukt enthaltenden Polyisocyanats 29 Gew.-%.
F. Amidgruppen enthaltende Trennmittel c2):
   Amidamin-Ölsäuresalz (hergestellt aus 1 Mol 3-Dimethylamino-propylamin-1 und 2 Mol Ölsäure)

### Herstellung der Dispersionen und deren Stabilität:

Die Komponenten a) bis g) werden 60 Sekunden bei 1000 Umdrehungen pro Minute und Raumtemperatur mittels eines Pendraulikrührers vermischt und verschlossen stehen gelassen. Das Absatzverhalten dieser so hergestellten Dispersionen wird beobachtet. Die Ergebnisse und die Zusammensetzungen (in Gewichtsteilen) sind der nachfolgenden Tabelle zu entnehmen:

**Tabelle 1: Stabilität der Dispersionen**

| Dispersionen Nr. Komponenten | 1* | 2* | 3* | 4 | 5 | 6 | 7 | 8 | 9 | 10 |
|---|---|---|---|---|---|---|---|---|---|---|
| Polyether 1 | 60 | 60 | 60 | 60 | 60 | 60 | 60 | 60 | 60 | 60 |
| Polyether 2 | 40 | 40 | 40 | 40 | 40 | 40 | 40 | 40 | 40 | 40 |
| Amidamin | 3 | 3 | 3 | 3 | 3 | 3 | 3 | 3 | 3 | 3 |
| Wasser | - | 0,5 | 0,5 | 0,5 | 0,5 | 0,5 | 0,5 | 0,5 | 0,5 | 0,5 |
| FSPE 1 | 3 | 3 | | | | | | | | |
| FSPE 2 | | | 3 | | | | | | | |
| FSPE 3 | | | | 3 | | | | | | |
| FSPE 4 | | | | | 3 | | | | | |
| FSPE 5 | | | | | | 3 | | | | |
| FSPE 6 | | | | | | | 3 | | | |
| FSPE 7 | | | | | | | | 3 | | |
| FSPE 8 | | | | | | | | | 3 | |
| FSPE 9 | | | | | | | | | | 3 |
| Stabilität in Tagen | 13 | 4 | 5 | 10 | 20 | >50 | 20 | 35 | 23 | 25 |

| | | | | | | | | | | |
|---|---|---|---|---|---|---|---|---|---|---|
| * Vergleichsdispersionen; die Mengenangaben beziehen sich auf Gewichtsteile | | | | | | | | | | |

Die deutlich verbesserte Stabilität der erfindungsgemäßen Polyetherpolyoldispersionen geht aus den Beispielen 4 bis 10 in Tabelle 1 hervor.

Herausragend verhält sich der Fettsäurepolyester FSPE 5 mit über 50 Tagen Dispersionsstabilität.

Schon die anteilige Mitverwendung eines Polyetherpolyols zur Herstellung der Komponente c1) zusammen mit Trimethylolpropan (siehe Dispersion 9 mit FSPE 8) verbessert die Stabilität bereits auf 23 Tage im Vergleich zur Dispersion 3 mit FSPE 2, der mit Trimethylolpropan als Polyolkomponente hergestellt wurde. Die Dispersion 3 hat eine Stabilität von nur 5 Tagen.

Eine erhöhte Stabilität der Dispersionen mit den Trennkomponenten c1) wird auch ohne Amidamide c2) erreicht (seihe Tabelle 2)

**Tabelle 2: Stabilität der Dispersionen ohne c2)**

| Dispersionen Nr. Komponenten | 11* | 12 |
|---|---|---|
| Polyether 1 | 60 | 60 |
| Polyether 2 | 40 | 40 |
| Wasser | 0,5 | 0,5 |
| FSPE1 | 3,0 | - |
| FSPE5 | - | 3,0 |
| Stabilität in Tagen | 1 | 25 |

| | | |
|---|---|---|
| * Vergleichsdispersion; die Mengenangaben beziehen sich auf Gewichtsteile | | |

Beispiel 12 der Tabelle 2 zeigt eine. wesentlich längere Dispersionsstabilität der erfindungsgemäßen Dispersion mit Fettsäurepolyester c1) gegenüber der nicht erfindungsgemäßen Dispersion 11.

### Herstellung der PUR-Formteile und deren Trennverhalten:

Es werden die Ausgangskomponenten und deren Mengen gemäß Tabelle 3 eingesetzt.

Polyolgemisch und Treibmittel werden einem 2-Komponenten-Dosier-Mischgerät zugeführt und dort zur Herstellung des aufschäumenden Reaktionsgemisches mit dem Polyisocyanat intensiv abgemischt und sofort in ein 60°C heißes Metallwerkzeug aus Aluminium eingebracht.

Die Form weist eine Größe von 200 x 300 x 10 mm auf, wobei die Form und das Formteil der Schließeinheit auf 60°C temperiert sind.

Ein äußeres Trennmittel wurde nicht verwendet.

Die Zusammensetzung der Formteile in Gewichtsteilen sowie die Ergebnisse der Tests sind der nachfolgenden Tabelle zu entnehmen:

**Tabelle 3: Eigenschaften der PUR-Formteile und ihre Zusammensetzung**

| Beispiele Nr. Komponente | 1 (Vergleich ) | 2 | 3 | 4 | 5 |
|---|---|---|---|---|---|
| Polyol 1 [Gew.-Teile] | 60 | 60 | 60 | 60 | 60 |
| Polyol 2 [Gew.-Teile] | 40 | 40 | 40 | 40 | 40 |
| Amidaminsalz [Gew.-Teile] | 3 | 3 | 3 | 3 | - |
| Stabilisator B 8411 [Gew.-Teile] | 0,8 | 0,8 | 0,8 | 0,8 | 0,8 |
| Aktivator Desmorapid 726b [Gew.-Teile] | 1,0 | 1,0 | 1,0 | 1,0 | 1,2 |
| Wasser [Gew.-Teile] | 0,5 | 0,5 | 0,5 | 0,5 | 0,5 |
| FSPE 2 [Gew.-Teile] | 3 | | | | |
| FSPE 5 [Gew.-Teile] | | 3 | | | 3 |
| FSPE 7 [Gew.-Teile] | | | 3 | | |
| FSPE 9 [Gew.-Teile] | | | | 3 | |
| Vermischungsverhältnis 100 Gew.-Teile Polyolformulierung zu Gew.-Teilen Isocyanat | 132 | 132 | 132 | 132 | 134 |
| Index 100 | | | | | |
| Rohdichte Form [kg/m³] | 600 | 600 | 600 | 600 | 600 |
| Entformungszeit [min] | 3 | 3 | 3 | 3 | 3 |
| Shore Härte D | 70 | 70 | 70 | 70 | 70 |
| Zahl der entformten Teile einer Plattengröße von 300 x 200 x 10 mm | >35 | >35 | >35 | >35 | >35 |

Das Trennverhalten der erfindungsgemäßen PU-Formkörper war in allen Beispielen der Tabelle 3 einwandfrei.

Die Versuche wurden nach der jeweils 35. Entformung abgebrochen, da die Formteile sowie das Material im Angussbereich leicht entnehmbar waren.

## Patentansprüche

1. Stabile Dispersionen aus Polyolformulierungen für Polyurethanformkörper bestehend aus
a) einem oder mehreren Polyetherpolyolen mit einer OH-Zahl von 350 bis 1830 mg KOH/g und mit einer Funktionalität von 2 bis 8 und gegebenenfalls bis zu 40 Gew.-%, bezogen auf a) und b), Polyesterpolyolen mit einer OH-Zahl von 250 bis 500 mg KOH/g und mit einer Funktionalität von 2 bis 3,
b) gegebenenfalls einem oder mehreren Polyetherpolyolen mit einer OH-Zahl von 15 bis 250 mg KOH/g und einer Funktionalität von 2 bis 6,
c1) einem oder mehreren Estergruppen enthaltenden Trennmitteln,
c2) gegebenenfalls einem oder mehreren Amidgruppen enthaltenden Trennmitteln,
d) gegebenenfalls Wasser oder Wasser und physikalische Treibmittel,
e) gegebenenfalls Aktivatoren,
f) gegebenenfalls Stabilisatoren,
g) gegebenenfalls weiteren Zusatzstoffen und Hilfsmitteln,
wobei die Trennmittel c1) aufgebaut sind aus
1) einer oder mehreren Fettsäuren mit 10 bis 40 Kohlenstoffatomen,
2) gegebenenfalls einer oder mehreren Di- oder Polycarbonsäuren,
3) und einer oder mehreren Polyetherpolyolkomponenten mit Ethylenoxid- und/oder Propylenoxidgruppen im Molekül mit einer OH-Zahl von 200 bis 1000 mg KOH/g, bevorzugt von 400 bis 800 mg KOH/g, mit einer Funktionalität von 2 bis 6, bevorzugt von 2 bis 4, wobei die Polyetherpolyolkomponenten durch andere Polyole, die keine Ethylenoxid und/oder Propylenoxideinheiten im Molekül aufweisen, in einer Menge von bis zu 50 Äquivalent-% ersetzt sein können.

2. Verfahren zur Herstellung von stabilen Dispersionen gemäß Anspruch 1, **dadurch gekennzeichnet, dass** die Komponenten a) bis g) miteinander vermischt werden.

3. Zellige Polyurethanformkörper erhältlich durch Umsetzung von
A) einem oder mehreren organischen Isocyanaten
und
B) stabilen Dispersionen aus Polyolformulierungen gemäß Anspruch 1.

4. Verfahren zur Herstellung von zelligen Polyurethanformkörpern gemäß Anspruch 3, **dadurch gekennzeichnet, dass**
A) ein oder mehrere organische Isocyanate aus der Gruppe bestehend aus organischen Polyisocyanaten, modifizierten organischen Polyisocyanaten und organischen Polyisocyanatprepolymeren
mit
B) stabilen Dispersionen aus Polyolformulierungen gemäß Anspruch 1 umgesetzt werden.

5. Verwendung der stabilen Dispersionen gemäß Anspruch 1 zur Herstellung von zelligen Polyurethanformkörpern.

## Claims

1. Stable dispersions of polyol formulations for polyurethane mouldings consisting of
a) one or more polyetherpolyols with an OH number of 350 to 1830 mg KOH/g and a functionality of 2 to 8 and optionally up to 40 wt%, based on a) and b), of polyesterpolyols with an OH number of 250 to 500 mg KOH/g and a functionality of 2 to 3,
b) optionally one or more polyetherpolyols with an OH number of 15 to 250 mg KOH/g and a functionality of 2 to 6,
c1) one or more release agents containing ester groups,
c2) optionally one or more release agents containing amide groups,
d) optionally water or water and physical blowing agents,
e) optionally activators,
f) optionally stabilizers,
g) optionally further additives and auxiliaries, wherein the release agents c1) are constructed of
1) one or more fatty acids having 10 to 40 carbon atoms,
2) optionally one or more dicarboxylic or polycarboxylic acids,
3) and one or more polyetherpolyol components with ethylene oxide and/or propylene oxide groups in the molecule with an OH number of 200 to 1000 mg KOH/g, preferably of 400 to 800 mg KOH/g, with a functionality of 2 to 6, preferably of 2 to 4, wherein up to 50 equivalent % of the polyetherpolyol components may be replaced by other polyols which are free of ethylene oxide and/or propylene oxide units in the molecule.

2. Process for production of stable dispersions according to Claim 1, **characterized in that** the components a) to g) are mixed together.

3. Cellular polyurethane mouldings obtainable by reaction of
A) one or more organic isocyanates,
and
B) stable dispersions of polyol formulations according to Claim 1.

4. Process for production of cellular polyurethane mouldings according to Claim 3, **characterized in that**
A) one or more organic isocyanates from the group consisting of organic polyisocyanates, modified organic polyisocyanates and organic polyisocyanate prepolymers are reacted with
B) stable dispersions of polyol formulations according to Claim 1.

5. Use of stable dispersions according to Claim 1 for production of cellular polyurethane mouldings.

## Revendications

1. Dispersions stables de compositions de polyols pour corps moulés à base de polyuréthane, constituées
a) d'un ou de plusieurs polyétherpolyols ayant un indice de groupes OH de 350 à 1 830 mg de KOH/g et ayant une fonctionnalité de 2 à 8 et éventuellement de jusqu'à 40 % en poids, par rapport à a) et b), de polyesterpolyols ayant un indice de groupes OH de 250 à 500 mg de KOH/g et ayant une fonctionnalité de 2 à 3,
b) éventuellement d'un ou de plusieurs polyétherpolyols ayant un indice de groupes OH de 15 à 250 mg de KOH/g et une fonctionnalité de 2 à 6,
c1) d'un ou de plusieurs agents de démoulage contenant des groupes ester,
c2) éventuellement d'un ou de plusieurs agents de démoulage contenant des groupes amido,
d) éventuellement d'eau ou d'eau et d'agents d'expansion physiques,
e) éventuellement d'activateurs,
f) éventuellement de stabilisants,
g) éventuellement d'autres additifs et adjuvants,
les agents de démoulage c1) étant constitués
i) d'un ou de plusieurs acides gras ayant de 10 à 40 atomes de carbone,
2) éventuellement d'un ou de plusieurs acides di- ou polycarboxyliques,
3) et d'un ou de plusieurs composants polyétherpolyol comportant des groupes oxyde d'éthylène et/ou oxyde de propylène dans la molécule, ayant un indice de groupes OH de 200 à 1 000 mg de KOH/g, de préférence de 400 à 800 mg de KOH/g et ayant une fonctionnalité de 2 à 6, de préférence de 2 à 4, les composants polyétherpolyol pouvant être remplacés par d'autres polyols qui ne comportent pas de motifs oxyde d'éthylène et/ou oxyde de propylène dans la molécule, en une quantité allant jusqu'à 50 % en équivalents.

2. Procédé pour la préparation de dispersions stables selon la revendication 1, **caractérisé en ce qu'**on mélange entre eux les composants a) à g).

3. Corps moulés cellulaires à base de polyuréthane, pouvant être obtenus par mise en réaction
A) d'un ou de plusieurs isocyanates organiques
et
B) de dispersions stables de compositions de polyols selon la revendication 1.

4. Procédé pour la production de corps moulés cellulaires à base de polyuréthane selon la revendication 3, **caractérisé en ce qu'**on fait réagir
A) un ou plusieurs isocyanates organiques choisis dans le groupe constitué par des polyisocyanates organiques, des polyisocyanates organiques modifiés et des prépolymères polyisocyanates organiques
avec
B) des dispersions stables de compositions de polyols selon la revendication 1.

5. Utilisation des dispersions stables selon la revendication 1, pour la production de corps moulés cellulaires à base de polyuréthane.
